# EUROPEAN PATENT APPLICATION

(11) **EP 1 188 520 A2**
(43) Date of publication of application: **20.03.2002**
(21) Application number: 01117659.1
(22) Date of filing: 25.07.2001
(51) Int. Cl.: B24C 3/12

(54) **Method and apparatus for surface finishing of manufactured articles made of porcelain stoneware**

(30) Priority: 28.07.2000 IT MO000166
(71) Applicant: Giavelli, Loris, 42014 Castellarano (IT)
(72) Inventor: Giavelli, Loris, 42014 Castellarano (IT)
(74) Representative: Modiano, Guido, Dr.-Ing.

(57) **Abstract**

A method for surface finishing of manufactured articles made of porcelain stoneware, comprising a step of propelling, at a preset velocity, material (M) having an abrasive action against an exposed surface of the manufactured articles (P), the abrasive action being adapted to give the exposed surface a uniformly substantially opaque appearance.

## Description

The present invention relates to a method and an apparatus for surface finishing of manufactured articles made of porcelain stoneware.

In the field of ceramics, the expression "porcelain stoneware" generically designates a class of manufactured articles for the building sector, such as tiles or slabs, obtained by high-temperature sintering of inorganic nonmetallic materials, whose body has a compact and highly vitrified mass with low porosity and is constituted by one or more crystalline phases immersed in a glassy matrix.

This class is constantly evolving and comprises, in addition to non-decorated and unfinished manufactured articles, many types of variously decorated and finished manufactured articles.

Manufactured articles made of porcelain stoneware can be decorated both during forming and after forming, along an appropriately provided decoration line, which precedes the step for thermal treatment for sintering.

The decoration obtained during forming can affect the entire mass of the manufactured articles or only their surface layers; said layers can be constituted not only by mixes but also by glazes, granulated frits, or other material.

A decoration line is constituted by one or more successive stations for the wet or dry application of decorative material (soluble salts, glazes, screenprinted glazes, grits or others) and/or by one or more surface treatment stations.

The decoration can be applied to the entire surface, e.g. in the case of glazes or soluble salts applied by means of a disk, or selectively, according to predefined patterns, as in the case of screen-printing with glaze or pastes based on soluble salts applied by means of printing screens or rollers.

The types of manufactured article made of porcelain stoneware that are most highly sought by the current market include types having a so-called antiqued rustic effect or imitating natural stone having nontransparent surfaces which do not reflect the light, are opaque and soft and silky to the touch.

Methods for obtaining such surfaces are known which entail applying solutions of soluble salts or glazes having a specific composition and/or the execution of surface finishing processes, such as lapping or polishing, which entail the use of abrasive grinding wheels.

Said glazes or solutions contain substance which, during thermal treatment, undergo transformations that can give an opaque, nontransparent appearance to the surface of the manufactured articles that they cover.

However, since it is not always possible to predict and control precisely the development of these transformations, they often produce surfaces which are excessively dry, grainy and rough to the touch or have unwanted transparent regions.

Finishing processes, such as lapping and polishing of the surface, also entail drawbacks and do not ensure that uniformly opaque surfaces are obtained.

If they are performed on manufactured articles decorated with soluble salts, they cause changes in the color shades of such manufactured articles which depend on the amount of material removed and on the degree of penetration of the salts.

If instead they are performed on decorated and glazed manufactured articles, it is necessary to apply to the decoration a layer of transparent or semitransparent glaze, so as to prevent the grinding wheels from removing the decoration itself.

Moreover, abrasive grinding wheels do not act uniformly on any intentional structural irregularities of the body of the manufactured articles (hollows, cracks, recessed veins, raised regions) thus producing unwanted glossy/mat and transparent/opaque contrasts.

Finally, it is noted that grinding wheels are usually cooled and lubricated with water; this, in addition to entailing considerable water consumption, entails forming sludge which must be processed, recovered or disposed of and constitutes one of the main sources of environmental pollution.

The aim of the present invention is to eliminate the above-noted drawbacks of conventional methods for obtaining manufactured articles made of porcelain stoneware having nontransparent surfaces by providing a method and an apparatus for the surface finishing of manufactured articles made of porcelain stoneware which allows to obtain manufactured articles whose exposed surface is uniformly opaque, nontransparent and mat regardless of any structural irregularities of the body of said manufactured articles, allows to avoid creating unwanted contrast effects, to limit hue variations of said manufactured articles, and to eliminate the production of sludge.

Within the scope of this aim, an object of the present invention is to provide an apparatus for the surface finishing of manufactured articles made of porcelain stoneware having a structure which is simple, relatively easy to provide in practice, safe in use, effective in operation, and relatively low in cost.

This aim and this and other objects which will become better apparent hereinafter are achieved by the present method for surface finishing of manufactured articles made of porcelain stoneware, characterized in that it consists in propelling, at a preset velocity, materials having an abrasive action against the exposed surface of said manufactured articles, said abrasive action being adapted to give said exposed surface a uniformly substantially opaque appearance.

The apparatus for performing the method is characterized in that it comprises: a frame for supporting a booth crossed by a line for conveying manufactured articles made of porcelain stoneware; at least one nozzle for delivering a jet of compressed air and material having an abrasive action, which is arranged inside said booth so as to lie above the manufactured articles and is connected to respective feeder means; a device for aspirating the material having an abrasive action and/or the abraded material, which is supported so as to be connected to the inside of the booth; and a device for recovering the materials that are not aspirated and collect on the bottom of said booth.

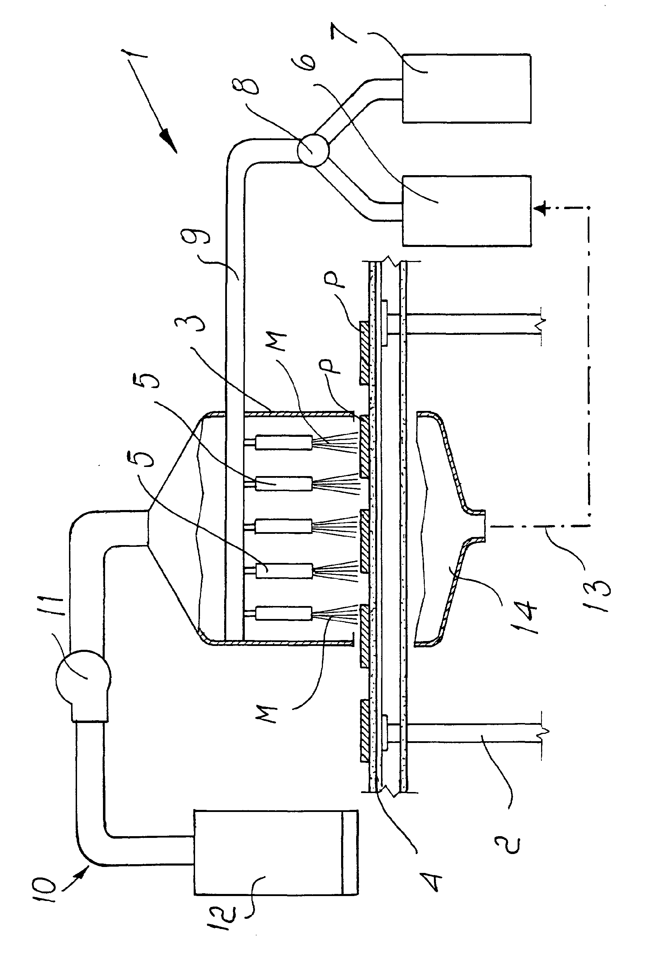

Further characteristics and advantages of the present invention will become better apparent from the detailed description of a preferred but not exclusive embodiment of a method and an apparatus for the surface finishing of manufactured articles made of porcelain stoneware, illustrated only by way of non-limitative example in the accompanying drawing, wherein the only figure illustrates a schematic view of an apparatus for performing the method according to the invention.

With reference to the figure, the reference numeral 1 generally designates an apparatus for performing the surface finishing of manufactured articles made of porcelain stoneware, such as tiles or slabs.

The apparatus 1 comprises a frame 2, which supports a treatment booth 3 crossed by a line 4 for conveying manufactured articles made of porcelain stoneware, such as tiles P.

Inside the booth 3 a plurality of dispensing nozzles 5 are provided, which lie above the tiles P against the exposed surfaces of which they propel, at a preset velocity, jets of compressed air mixed with and entraining an abrasive material M.

The apparatus 1 further comprises means 6 for feeding only the compressed air and means for feeding only the material M, constituted by a reservoir 7, which are connected to an adjustment device 8, such as a valve, for regulating their respective flows; conveniently, the adjustment device 8 is connected to a manifold 9 which supplies the nozzles 5.

Finally, the apparatus 1 comprises an aspirator device 10, substantially constituted by a fan 11 and a removal filter 12, which eliminates from the atmosphere inside the booth 3 both the abrasive material M and the material abraded from the surface of the tiles P.

A device 13 for recovering the abrasive material M and the abraded material that have not been aspirated and have collected by gravity on the bottom 14 of the booth 3 allows to recirculate said materials.

Advantageously, the nozzles 5 are movable, can be orientated and have a modulated aperture; this, together with the adjustment of the pressure of the compressed air and of the amount of material M entrained and propelled by such air, allows to modulate the abrasive action applied to the surfaces of the tiles P.

The material M can be constituted, for example, by corundum, zircon sands or microspheres of glass, or the like, having a specific particle size distribution.

The method for the surface finishing of manufactured articles made of porcelain stoneware according to the invention consists in propelling, at a preset velocity, material M having an abrasive action against the exposed surface of the tiles P that advance along a conveyance line.

The material M is propelled against such surface by means of jets of compressed air at a preset velocity: the abrasive action that it applies gives all of said surface a uniformly and substantially opaque, nonreflective, mat appearance.

Depending on the type of material M, on its physical characteristics and on its particle size distribution, and by adjusting the pressure of the air and the flow of material M, the abrasive action applied to the exposed surface of the tiles P can be modulated, thus allowing to render said opaque surfaces more or less soft to the touch, antiqued or rustic or silky.

It is noted that the material M propelled by the compressed air acts uniformly on the entire exposed surface of the tiles P, of which it also follows any structural irregularities (cracks, fissures, hollows, raised regions); undesirable glossy/mat and transparent/opaque contrasts are thus not created.

The method according to the invention can be performed on manufactured articles made of porcelain stoneware which are raw or decorated in-depth or only superficially with any of the methods currently known in the ceramics sector.

Moreover, the process is a dry process and therefore there is no consumption of water or production of sludge to be disposed of or recovered.

In practice it has been found that the described invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02000A000166 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for surface finishing of manufactured articles made of porcelain stoneware, **characterized in that** it comprises the step of propelling, at a preset velocity, material having an abrasive action against an exposed surface of said manufactured articles, said abrasive action being adapted to give said exposed surface a uniformly substantially opaque appearance.

2. The method according to claim 1, **characterized in that** said propelling step comprises propelling onto said exposed surface at least one jet of compressed air at a preset pressure, said air being mixed with, and entraining, said material having an abrasive action.

3. The method according to one or more of the preceding claims, **characterized in that** said material having an abrasive action is of the type of corundum or the like having a specific particle size distribution.

4. The method according to one or more of the preceding claims, **characterized in that** said material having an abrasive action is of the type of zircon sands or the like, having a specific particle size distribution.

5. The method according to one or more of the preceding claims, **characterized in that** said material having an abrasive action is of the type of microspheres of glass or the like having a specific particle size distribution.

6. An apparatus for performing the method according to one or more of the preceding claims, **characterized in that** it comprises: a frame for supporting a booth crossed by a line for conveying said manufactured articles made of porcelain stoneware; at least one nozzle for delivering a jet of compressed air and material having an abrasive action, which is arranged inside said booth above the manufactured articles and is connected to respective supply means; a device for aspirating the material having an abrasive action and/or the abraded material, which is supported so as to be connected to the inside of the booth; and a device for recovering the materials that are not aspirated and collect on the bottom of said booth.

7. The apparatus according to claim 6, **characterized in that** said nozzles can be orientated and have an aperture which can be modulated.

8. The apparatus according to claim 6, **characterized in that** said nozzles are movable.

9. The apparatus according to claim 6, **characterized in that** said device for aspirating comprises means for filtering and removing the aspirated materials.
